# EUROPÄISCHE PATENTSCHRIFT

(11) **EP 1 083 077 B1**
(45) Veröffentlichungstag und Bekanntmachung des Hinweises auf die Patenterteilung: **18.04.2007**
(21) Anmeldenummer: 00117587.6
(22) Anmeldetag: 16.08.2000
(51) Int. Cl.: B60K 35/00

(54) **Anzeigevorrichtung**
Indicator device
Dispositif afficheur

(30) Priorität: 31.07.2000 DE 10037361; 07.09.1999 DE 19942737
(43) Veröffentlichungstag der Anmeldung: 14.03.2001
(73) Patentinhaber: SIEMENS AKTIENGESELLSCHAFT, 80333 München (DE)
(72) Erfinder: Noll, Heinrich, Dr., 64823 Gross-Umstadt (DE); Wend, Thorsten, 60439 Frankfurt (DE); Wolf, Helmut, dr., 65239 Hochheim (DE); Rein, Matthias, 64380 Rossdorf (DE)

(56) Entgegenhaltungen:
- DE-A- 4 335 854
- DE-C- 19 540 813
- DE-C- 19 737 726
- FR-A- 2 743 534

## Beschreibung

Die Erfindung betrifft ein Anzeigeinstrument, insbesondere in einem Kraftfahrzeug, mit einem bei Auflicht den Blick auf ein mit Abstand hinter ihm angeordnetes Zifferblatt ausschließendes, dunkel erscheinendes Deckglas und mit zumindest einer hinter dem Zifferblatt angeordneten Lichtquelle zum Durchleuchten des Zifferblattes und damit zum Sichtbar werden des Zifferblattes durch das Deckglas hindurch.

Anzeigeinstrumente der vorstehenden Art sind unter dem Begriff "Black-Panel-Design" bekannt und haben teilweise Eingang in die Praxis gefunden. Der Black-Panel-Effekt wird dadurch realisiert, daß man den Transmissionsgrad des Deckglases ähnlich wie bei einer Sonnenbrille durch einen Farbdruck auf 20% bis 40% reduziert. Das Zifferblatt wird bei den bekannten Anzeigeinstrumenten hell ausgeführt, so daß es bei Durchlichtbeleuchtung für den Betrachter trotz des dunklen Frontglases gut sichtbar erscheint.

Es hat sich gezeigt, daß zur Verwirklichung eines guten Black-Panel-Effektes das Deckglas relativ stark eingefärbt sein muß, damit das Zifferblatt bei ausgeschalteter Durchlichtbeleuchtung unsichtbar erscheint. Da jedoch für die Beleuchtung im Regelfall keine Glühbirnen verwendet werden können, weil sie zu viel Wärme erzeugen und man deshalb Leuchtdioden bevorzugt, ist man bei der zur Verfügung stehenden Lichtstärke recht beschränkt. Man ist deshalb bestrebt, das Durchlicht mit möglichst geringen Verlusten von der Lichtquelle zum Betrachter gelangen zu lassen. Dieser Zielrichtung steht jedoch der Wunsch entgegen, das Zifferblatt nicht allein durch Auflicht sichtbar werden zu lassen.

Ein Anzeigeinstrument mit den Merkmalen des Oberbegriffs des Anspruchs 1 ist bekannt aus FR-A-2 743 534.

Der Erfindung liegt das Problem zugrunde, ein Anzeigeinstrument der eingangs genannten Art so zu gestalten, dass ein Black-Panel-Effekt verwirklicht wird, ohne dass für die Durchlichtbeleuchtung unerwünscht hohe Lichtstärken erforderlich werden.

Dieses Problem wird erfindungsgemäß dadurch gelöst, dass zur Verhinderung des Sichtbarwerdens des Zifferblattes bei ausschließlichem Auflicht die Transmission des Zifferblattes auf die Transmission des Deckglases abgestimmt ist, wobei das Deckglas und das Zifferblatt eine lichtwellenselektive Einfärbung aufweisen.

Durch diese erfindungsgemäße Ausbildung des Anzeigeinstrumentes stehen zur Herbeiführung des Black-Panel-Effektes zwei Parameter zur Verfügung. Die Abstimmung des Zifferblattes auf das Transmissionsverhalten des Deckglases ermöglicht es, die Transmission des Deckglases relativ gering herabzusetzen. Das dann durch das Deckglas hindurch auf das Zifferblatt gelangende Auflicht führt jedoch nicht zu einem Sichtbarwerden des Zifferblattes, weil dieses hinsichtlich seiner Transmission dank der Erfindung so auf das Deckglas abgestimmt ist, dass das von außen auftreffende Licht nicht durch das Deckglas hindurch zurück zum Betrachter gelangt. Insgesamt lässt sich durch diese erfindungsgemäße Abstimmung ein guter Black-Panel-Effekt erzielen, ohne dass nicht zu verwirklichende Anforderungen an die Lichtstärke der Lichtquelle zu stellen sind.

Den Black-Panel-Effekt kann man auf einfache Weise verstärken, indem man die Transmission des Deckglases auf das Lichtspektrum der Lichtquelle abstimmt und beispielsweise für die Wellenlänge der Lichtquelle eine hohe Transmission, für andere Wellenlängen jedoch eine geringe Transmission wählt. Dadurch kann Auflicht vom Zifferblatt zurückgehalten werden, ohne dass die Transmission des von der Lichtquelle ausgehenden Lichtes eingeschränkt wird.

Besonders einfach ist das Anzeigeinstrument gestaltet, wenn das Deckglas eine Dunkelfärbung hat, die ein zum Deckglas hin gut reflektierendes Zifferblatt noch sichtbar erscheinen lässt und damit eine geringe Transmission aufweist, und wenn das Zifferblatt schlecht reflektierend ausgebildet ist. Bei einem solchen Anzeigeinstrument darf bei Auflicht relativ viel Licht auf das Zifferblatt treffen, ohne dass es zurück zum Betrachter reflektiert ... wird, weil das Zifferblatt durch seine Dunkelfärbung nur wenig Licht reflektiert.

Die schlechte Reflektion des Zifferblattes läßt sich sehr einfach dadurch verwirklichen, daß das Zifferblatt dunkel ausgebildet ist.

Alternativ ist es jedoch auch möglich, daß das Zifferblatt durch seine Oberflächenform schlecht reflektierend ausgebildet ist. Hierzu kann man das Zifferblatt beispielsweise mit einer stark aufgerauten Oberfläche versehen.

Zur weiteren Verminderung der Lichtstärke trägt es bei, wenn das Deckglas und das Zifferblatt eine lichtwellenlängenselektive Einfärbung aufweisen.

Bei einem Zifferblatt mit Negativdarstellung kann man das gegen die nicht lichtdurchlässigen Bereiche gelangende Licht der Lichtquelle ebenfalls zur Durchleuchtung der lichtdurchlässigen Bereiche verwenden, wenn das Zifferblatt auf seiner der Lichtquelle zugewandten Seite in nicht zu durchleuchtenden Bereichen einen Weißdruck aufweist. Hierdurch wird das gegen die lichtundurchlässigen Bereiche gelangende Licht reflektiert und kann nach erneuter Reflektion zu den lichtdurchlässigen Bereichen gelangen.

Statt das Reflektionsvermögen des Zifferblattes einzuschränken, kann man gemäß einer anderen Ausgestaltung der Erfindung auch vorsehen, daß das Deckglas mit einem Polarisationsfilter versehen ist und das Zifferblatt stark reflektierend ausgebildet ist. Bei einer solchen Ausbildung macht man sich den Effekt zunutze, daß durch einen Polarisationsfilter gelangendes Licht nach einer Reflektion nicht zurück durch den Polarisationsfilter gelangen kann.

Als Lichtquelle für das Anzeigeinstrument kann man eine übliche Kaltkathodenröhre verwenden. Diese hat eine hohe Lichtstärke und kann durch eine entsprechende Krümmung über den zu beleuchtenden Bereich verlaufen.

Kaltkathodenröhren haben bei niedrigen Temperaturen nur eine geringe Lichtstärke und sind nur schwierig zu dimmen. Das läßt sich beheben, wenn man gemäß einer anderen Ausgestaltung der Erfindung vorsieht, daß als Lichtquelle eine Vielzahl von einzelnen Leuchtdioden dient.

Eine ganz besonders geringe Lichtstärke der Lichtquelle ist erforderlich, wenn das Zifferblatt in positiver Darstellung ausgeführt ist.

Bei einem Anzeigeinstrument, bei dem das Zifferblatt in negativer Darstellung ausgeführt ist, läßt sich eine optimale Beleuchtung mit geringem Stromverbrauch mittels Leuchtdioden verwirklichen, wenn hinter jedem Skalenstrich bzw. hinter jeder Ziffer oder jedem Anzeigesymbol eine Leuchtdiode als Lichtquelle sitzt.

Die Erfindung läßt verschiedene Ausführungsformen zu. Zur weiteren Verdeutlichung ihres Grundprinzips sind drei davon in der Zeichnung dargestellt und werden nachfolgend beschrieben. Diese zeigt in
- Figur 1: einen senkrechten Schnitt durch ein Anzeigeinstrument nach der Erfindung,
- Figur 2: einen senkrechten Schnitt durch einen Teilbereich einer zweiten Ausführungsform des Anzeigeinstrumentes,
- Figur 3: einen senkrechten Schnitt durch eine dritte Ausführungsform eines erfindungsgemäßen Anzeigeinstrumentes.

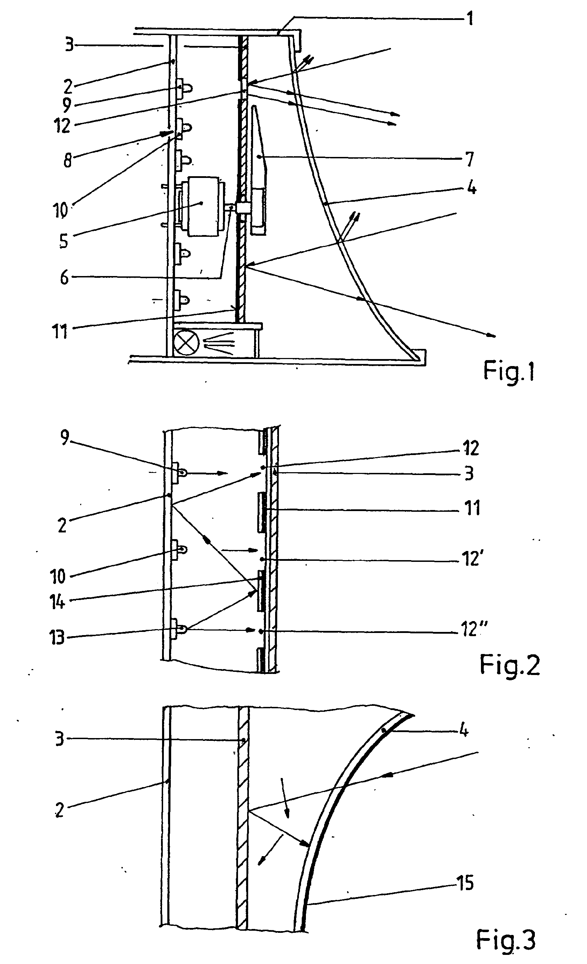

Das in Figur 1 gezeigte Anzeigeinstrument hat ein Gehäuse 1, welches eine Leiterplatte 2, ein Zifferblatt 3 und ein Deckglas 4 haltert. Auf der Leiterplatte 2 ist ein Zeigerantrieb 5 mit einer Zeigerwelle 6 angeordnet, die einen Zeiger 7 trägt. Ebenfalls auf der Leiterplatte 2 befinden sich mehrere Lichtquellen 8, die durch Leuchtdioden 9, 10 gebildet sind.

Wichtig für die Erfindung ist, daß die Transmission des Zifferblattes 3 durch einen Schwarzdruck 11 herabgesetzt ist. Ebenfalls ist die Transmission des Deckglases 4 beispielsweise durch eine Einfärbung vermindert. Die Verminderung der Transmission des Deckglases 4 und des Zifferblattes 3 sind aufeinander abgestimmt. Das Zifferblatt 3 ist bei dieser Ausführungsform für die Negativdarstellung ausgebildet. Es hat deshalb nicht durch den Schwarzdruck 11 abgedeckte Symbolbereiche 12, hinter denen jeweils eine der Leuchtdioden 9 angeordnet sein kann, so daß das jeweilige Licht unmittelbar durch den Symbolbereich 12 zu gelangen vermag. Pfeile zeigen in Figur 1, daß das Auflicht stark vermindert nach außen zurück reflektiert wird, so daß der Black-Panel-Effekt eintritt, während das Durchlicht von den Lichtquellen 8 gut den Betrachter erreicht.

Die Figur 2 zeigt die Leiterplatte 2 mit den Leuchtdioden 9, 10 und einer weiteren Leuchtdiode 13. Weiterhin ist das Zifferblatt 3 mit den Symbolbereichen 12, 12', 12'' dargestellt. Zwischen den Symbolbereichen 12, 12', 12'' ist auf der Rückseite des Zifferblattes 3 der Schwarzdruck 11 aufgebracht. Dieser wird zu den Leuchtdioden 9, 10, 13 durch einen Weißdruck 14 abgedeckt. Dadurch wird Licht, welches gegen den Weißdruck 14 gelangt, reflektiert und steht letztlich doch zum Durchleuchten der Symbolbereiche 12, 12' und 12" zur Verfügung, was durch Pfeile für die Leuchtdiode 13 veranschaulicht wurde.

Bei der Ausführungsform nach der Figur 3 ist das Deckglas 4 mit einem Polarisationsfilter 15 versehen, welcher als dünne Folie ausgebildet sein kann. Hierdurch ist das vom Zifferblatt 3 reflektierte Licht nicht mehr in der Lage, zurück durch den Polarisationsfilter 15 zum Betrachter zu gelangen.

## Patentansprüche

1. Anzeigeinstrument, insbesondere in einem Kraftfahrzeug, mit einem bei Auflicht den Blick auf ein mit Abstand hinter ihm angeordnetes Zifferblatt (3) ausschließendes, dunkel erscheinendes Deckglas (4) und mit zumindest einer hinter dem Zifferblatt (3) angeordneten Lichtquelle (8) zum Durchleuchten des Zifferblattes (3) und damit zum Sichtbarwerden des Zifferblattes durch das Deckglas (4) hindurch, **dadurch gekennzeichnet, dass** zur Verhinderung des Sichtbarwerdens des Zifferblattes (3) bei ausschließlichem Auflicht die Transmission des Zifferblattes (3) auf die Transmission des Deckglases (4) abgestimmt ist, wobei das Deckglas (4) und das Zifferblatt (3) eine lichtwellenlängenselektive Einfärbung aufweisen.

2. Anzeigeinstrument nach Anspruch 1, **dadurch gekennzeichnet, dass** die Transmission des Deckglases (4)auf das Lichtspektrum der Lichtquelle (8) abgestimmt ist.

3. Anzeigeinstrument nach den Ansprüchen 1 oder 2, **dadurch gekennzeichnet, dass** das Deckglas (4) eine Dunkelfärbung hat, die ein zum Deckglas (4) hin gut reflektierendes Zifferblatt (3) noch sichtbar erscheinen lässt und damit eine geringe Transmission aufweist, und dass das Zifferblatt (3) schlecht reflektierend ausgebildet ist.

4. Anzeigeinstrument nach Anspruch 3, **dadurch gekennzeichnet, dass** das Zifferblatt (3) dunkel ausgebildet ist.

5. Anzeigeinstrument nach Anspruch 3, **dadurch gekennzeichnet, dass** das Zifferblatt (3) durch seine Oberflächenform schlecht reflektierend ausgebildet ist.

6. Anzeigeinstrument nach zumindest einem der vorangehenden Ansprüche, **dadurch gekennzeichnet, dass** das Zifferblatt (3) auf seiner der Lichtquelle (8) zugewandten Seite in nicht zu durchleuchtenden Bereichen einen Weißdruck (14) aufweist.

7. Anzeigeinstrument nach den Ansprüchen 1 oder 2, **dadurch gekennzeichnet, dass** das Deckglas (4) mit einem Polarisationsfilter (15) versehen ist und das Zifferblatt (3) stark reflektierend ausgebildet ist.

8. Anzeigeinstrument nach zumindest einem der vorangehenden Ansprüche, **dadurch gekennzeichnet, dass** als Lichtquelle (8) eine Kaltkathodenröhre dient.

9. Anzeigeinstrument nach zumindest einem der vorangehenden Ansprüche, **dadurch gekennzeichnet, dass** als Lichtquelle (8) eine Vielzahl von einzelnen Leuchtdioden (9, 10, 13) dient.

10. Anzeigeinstrument nach zumindest einem der vorangehenden Ansprüche, **dadurch gekennzeichnet, dass** das Zifferblatt (3) in positiver Darstellung ausgeführt ist.

11. Anzeigeinstrument nach zumindest einem der Ansprüche 1 bis 9, bei dem das Zifferblatt in negativer Darstellung ausgeführt ist, **dadurch gekennzeichnet, dass** hinter jedem Skalenstrich bzw. hinter jeder Ziffer oder jedem Anzeigesymbol (Symbolbereiche 12, 12', 12'') eine Leuchtdiode (9, 10, 13) als Lichtquelle (8) sitzt.

## Claims

1. Indicating instrument, especially in a motor vehicle, having a cover glass (4) that appears dark and, under incident light, rules out any view of a dial (3) arranged at a distance behind it, and having at least one light source (8) arranged behind the dial (3) to transilluminate said dial (3) and therefore render the dial visible through the cover glass (4), **characterized in that**, in order to prevent the dial (3) becoming visible when there is only incident light, the transmission of the dial (3) is matched to the transmission of the cover glass (4), the cover glass (4) and the dial (3) having a light-wavelength-selective colouring.

2. Indicating instrument according to Claim 1, **characterized in that** the transmission of the cover glass (4) is matched to the visible spectrum of the light source (8).

3. Indicating instrument according to Claim 1 or 2, **characterized in that** the cover glass (4) has a dark coloration which permits a dial (3) that reflects well toward the cover glass (4) still to appear visible, and therefore has a low transmission, and wherein the dial (3) is designed to reflect poorly.

4. Indicating instrument according to Claim 3, **characterized in that** the dial (3) is designed to be dark.

5. Indicating instrument according to Claim 3, **characterized in that** the dial (3) is designed to reflect poorly as a result of its surface form.

6. Indicating instrument according to at least one of the preceding claims, **characterized in that** on its side facing the light source (8), the dial (3) has white printing (14) in areas that are not to be transilluminated.

7. Indicating instrument according to Claim 1 or 2, **characterized in that** the cover glass (4) is provided with a polarization filter (15), and the dial (3) is designed to be highly reflective.

8. Indicating instrument according to at least one of the preceding claims, **characterized in that** the light source (8) used is a cold-cathode tube.

9. Indicating instrument according to at least one of the preceding claims, **characterized in that** the light source (8) used is a large number of individual light-emitting diodes (9, 10, 13).

10. Indicating instrument according to at least one of the preceding claims, **characterized in that** the dial (3) is designed with a positive display.

11. Indicating instrument according to at least one of Claims 1 to 9, in which the dial is designed with a negative display, **characterized in that** a light-emitting diode (9, 10, 13) is situated behind each scale mark and/or behind each number or each indicating symbol (symbol areas 12, 12', 12"), as a light source (8).

## Revendications

1. Instrument indicateur, notamment dans un véhicule automobile, comportant une vitre couvre-objet (4) d'aspect sombre interdisant, en présence de lumière incidente, la vue sur un cadran (3) placé à une certaine distance derrière la vitre, et au moins une source de lumière (8) placée derrière le cadran (3), destinée à éclairer le cadran (3) par transparence et, ainsi, à rendre le cadran visible à travers la vitre couvre-objet (4), **caractérisé par le fait que**, pour empêcher de rendre le cadran (3) visible lorsqu'il n'y a que de la lumière incidente, le pouvoir de transmission du cadran (3) est accordé sur le pouvoir de transmission de la vitre couvre-objet (4), la vitre couvre-objet (4) et le cadran (3) ayant une coloration sélective à la longueur d'ondes.

2. Instrument indicateur selon la revendication 1, **caractérisé par le fait que** le pouvoir de transmission de la vitre couvre-objet (4) est accordé sur le spectre lumineux de la source de lumière (8).

3. Instrument indicateur selon les revendications 1 ou 2, **caractérisé par le fait que** la vitre couvre-objet (4) a une coloration sombre, qui permet de rendre encore visible un cadran (3) réfléchissant bien dans la direction de la vitre couvre-objet (4), et a, ainsi, un faible pouvoir de transmission, et que le cadran (3) est conçu avec une mauvaise réflexion.

4. Instrument indicateur selon la revendication 3, **caractérisé par le fait que** le cadran (3) est sombre.

5. Instrument indicateur selon la revendication 3, **caractérisé par le fait que** le cadran (3) est conçu avec une mauvaise réflexion par la forme de sa surface.

6. Instrument indicateur selon au moins l'une des revendications précédentes, **caractérisé par le fait que** le cadran (3) a, sur sa face tournée vers la source de lumière (8), une impression en blanc (14) dans les zones à ne pas éclairer par transparence.

7. Instrument indicateur selon les revendications 1 ou 2, **caractérisé par le fait que** la vitre couvre-objet (4) est dotée d'un filtre à polarisation (15) et que le cadran (3) est fortement réfléchissant.

8. Instrument indicateur selon au moins l'une des revendications précédentes, **caractérisé par le fait qu'**un tube à cathode froide sert de source de lumière (8).

9. Instrument indicateur selon au moins l'une des revendications précédentes, **caractérisé par le fait qu'**une pluralité de diodes électroluminescentes (9, 10, 13) indépendantes sert de source de lumière (8).

10. Instrument indicateur selon au moins l'une des revendications précédentes, **caractérisé par le fait que** le cadran (3) est conçu pour une représentation en positif.

11. Instrument indicateur selon au moins l'une des revendications 1 à 9, dans lequel le cadran est conçu pour une représentation en négatif, **caractérisé par le fait que**, derrière chaque trait de l'échelle graduée et, respectivement, derrière chaque chiffre ou chaque symbole (zones de symboles 12, 12', 12"), se trouve une diode électroluminescente (9, 10, 13) en tant que source de lumière (8).
